# EUROPÄISCHE PATENTSCHRIFT

(11) **EP 3 285 958 B1**
(45) Veröffentlichungstag und Bekanntmachung des Hinweises auf die Patenterteilung: **20.03.2019**
(21) Anmeldenummer: 16731816.1
(22) Anmeldetag: 06.06.2016
(51) Int. Cl.: B23P 19/00, B21J 15/32, B25B 23/06

(54) **MAGAZIN**
MAGAZINE
MAGASIN

(30) Priorität: 08.06.2015 DE 102015109024
(43) Veröffentlichungstag der Anmeldung: 28.02.2018
(73) Patentinhaber: Weber Schraubautomaten GmbH, 82515 Wolfratshausen (DE)
(72) Erfinder: PFAFFENRATH, Erwin, 82549 Königsdorf (DE); WAGENSTALLER, Wolfgang, 82515 Wolfratshausen (DE); HARTMANN, Jochen, Lenggries 83661 (DE)
(74) Vertreter: Manitz Finsterwald Patentanwälte PartmbB
(86) Internationale Anmeldenummer: PCT/EP2016/062789
(87) Internationale Veröffentlichungsnummer: WO 2016/198356

(56) Entgegenhaltungen:
- CN-A- 104 625 360
- DE-A1-102008 051 489
- DE-A1-102009 040 764
- DE-A1-102011 009 259
- DE-A1-102013 211 128
- US-A1- 2010 018 354

## Beschreibung

Die vorliegende Erfindung betrifft ein Magazin zum Aufnehmen einer Mehrzahl von Fügeelementen und Zuführen der Fügeelemente zu einer Fügevorrichtung.

Ein Magazin gemäß dem Oberbegriff des Anspruchs 1 aus der CN 104 625 360 A bekannt.

Des Weiteren offenbart die DE 10 2008 051 529 A1 ein in ein Setzgerät integriertes Magazin mit einer spiralförmig ausgebildeten Speichernut, mittels welcher am äußeren Rand des Magazins in die Speichernut eingebrachte Fügeelemente in das Zentrum des Magazins gefördert werden und über einen zentral angeordneten Magazinausgang an ein Kopfstück des Setzgeräts abgegeben werden. Dieses Magazin hat den Nachteil, dass lediglich eine Sorte von Fügeelementen in dem Magazin gespeichert und dem Kopfstück des Setzgeräts zugeführt werden kann.

Der Erfindung liegt die Aufgabe zugrunde, ein Magazin zu schaffen, welches einen vielfältigeren Einsatz ermöglicht.

Diese Aufgabe wird durch ein Magazin mit den Merkmalen des Anspruchs 1 gelöst.

Der Erfindung liegt der allgemeine Gedanke zugrunde, das Magazin nicht mit einer einzigen spiralförmig verlaufenden Speichernut auszustatten, sondern stattdessen einen im Wesentlichen kreisförmigen Speichernutverlauf zu wählen, welcher es erlaubt, zwei oder sogar mehr als zwei Speichernuten vorzusehen, die sich zumindest teilweise parallel zueinander erstrecken können. Durch die Ausbildung von wenigstens zwei Speichernuten ist es wiederum möglich wenigstens zwei verschiedene Sorten von Fügeelementen in dem Magazin zu speichern und bedarfsweise abzugeben, nämlich wahlweise aus der einen Speichernut oder aus der anderen Speichernut. Das Magazin ist im Ergebnis also variabler und vielfältiger einsetzbar.

Bei den Fügeelementen kann es sich um Schrauben handeln, insbesondere Metallschrauben, um Elemente, die in Fließbohrprozessen verarbeitet werden, oder auch um gewindefreie Setzelemente, die in Reibschweißprozessen verarbeitet werden und aus einem Metallmaterial oder auch aus einem Kunststoffmaterial bestehen können.

Erfindungsgemäß weist das Magazin einen Vorschubmechanismus zur Bewegung der gespeicherten Fügeelemente entlang den Speichernuten auf. Der Vorschubmechanismus sorgt mit anderen Worten für eine Förderung der gespeicherten Fügeelemente von einem Eingang zu einem Ausgang des Magazins.

Vorteilhafte Ausbildungen der Erfindung sind den Unteransprüchen, der Beschreibung und der Zeichnung zu entnehmen.

Gemäß einer Ausführungsform sind die Speichernuten unterschiedlich ausgebildet. Beispielsweise können die Speichernuten an unterschiedliche Sorten von Fügeelementen angepasst sein, z.B. um unterschiedlich ausgebildete Fügeelemente formschlüssig aufnehmen zu können, wodurch eine besonders zuverlässige Speicherung der Fügeelemente in den Speichernuten und Bewegung der Fügeelemente entlang der Speichernuten erreicht wird. Es versteht sich aber, dass es grundsätzlich auch möglich ist, die Speichernuten mit einem identischen Profil auszubilden.

Vorteilhafterweise ist im Bereich einer offenen Seite der oder jeder Speichernut eine Kopfführung zum Führen von Köpfen der gespeicherten Fügeelemente vorgesehen. Durch die Kopfführung wird verhindert, dass die Fügeelemente aus den Speichernuten herausfallen können, wenn das Magazin in einer Lage geöffnet wird, in welcher die offenen Seiten der Speichernuten nach unten weisen. Die Kopfführung kann beispielsweise wenigstens eine Schiene umfassen, welche zu der offenen Seite der Speichernut beabstandet ist und die Köpfe der gespeicherten Fügeelemente teilweise überragt.

Grundsätzlich kommen Düsenvorrichtungen als Vorschubmechanismus in Betracht, welche die gespeicherten Fügeelemente entlang den Speichernuten blasen, oder auch Schieber, welche die gespeicherten Fügeelemente mechanisch voranschieben. Eine besonders einfache und robuste Form von Vorschubmechanismus besteht jedoch in einer Tellerbürste, deren Borsten mit den gespeicherten Fügeelementen in Eingriff stehen. Die Tellerbürste ist bevorzugt um eine Drehachse drehbar, welche durch den Krümmungsmittelpunkt der Speichernuten verläuft, d.h. die Speichernuten und die Tellerbürste haben das gleiche Zentrum.

Vorteilhafterweise sind die Borsten ausschließlich entlang zwei konzentrisch verlaufenden Kreisbahnen angeordnet, welche mit den Speichernuten zusammenfallen. Wegen der kreisförmig verlaufenden Speichernuten brauchen die Borsten mit anderen Worten nicht über die gesamte Fläche der Tellerbürste verteilt angeordnet zu sein, sondern lediglich entlang den Speichernuten zugeordneten Spuren, wodurch sich die Tellerbürste einfacher und kostengünstiger herstellen lässt.

Gemäß einer weiteren Ausführungsform verlaufen die Speichernuten über einen Winkelbereich von wenigstens 180° kreisförmig, d.h. sie bilden keine geschlossenen Kreise, sondern lediglich Teilkreise, um die Aufnahme und Abgabe der Fügeelemente zu erleichtern. Die Aufnahme und Abgabe der Fügeelemente wird zusätzlich vereinfacht, wenn die Endabschnitte der Speichernuten geringfügig divergieren.

Im Bereich eines Eingangsendes der oder jeder Speichernut, an welchem die Fügeelemente in die Speichernut einführbar sind, ist vorteilhafterweise ein Blockiermechanismus vorgesehen, welcher ein Herausfallen der Fügeelemente aus der Speichernut verhindert. Der Blockiermechanismus kann beispielsweise zwei beweglich gelagerte Klinken umfassen, die zur Versperrung der Speichernut durch Federkraft aufeinander zu vorgespannt sind. Zur Erleichterung der Einführung der Fügeelemente in die Speichernut ist der Blockiermechanismus so ausgebildet, dass er durch ein Mittel zur Bereitstellung von in die Speichernuten einzuführenden Fügeelementen zwangsgeöffnet werden kann.

Gemäß einer weiteren Ausführungsform ist eine Trennungseinheit im Bereich von Ausgangsenden der Speichernuten, an welchen die Fügeelemente den Speichernuten entnehmbar sind, angeordnet, um ein wahlweise der einen oder der anderen Speichernut entnommenes Fügeelement an einen Magazinausgang zu übergeben. Die Trennungseinheit kann wenigstens einen Trennungsschieber umfassen. Jeder Speichernut ist bevorzugt ein eigener Trennungsschieber zugeordnet, wobei die Trennungsschieber getrennt ansteuerbar und unabhängig voneinander betätigbar sind, insbesondere pneumatisch. Eine besonders kompakte Bauform wird erreicht, wenn sich die Trennschieber in einer Richtung verschieben lassen, welche quer zu den Endabschnitten der Speichernuten verläuft.

Gemäß noch einer weiteren Ausführungsform weist das Magazin eine Drucklufteinrichtung auf, mittels welcher ein Fügeelement aus der Trennungseinheit in den Magazinausgang bewegbar ist. Der Magazinausgang bildet bevorzugt einen Anschluss für eine Schlauchleitung, mittels welcher sich ein von dem Magazin ausgegebenes Fügeelement beispielsweise einem Werkzeug zuführen lässt. Mittels der Drucklufteinrichtung kann ein Fügeelement aus der Trennungseinheit über den Magazinausgang und die Schlauchleitung bis zu dem Werkzeug geblasen werden, wodurch sich die Zuführung des Fügeelements zu dem Werkzeug unabhängig von der Gravitation und folglich in unterschiedlichsten Lagen des Werkzeugs im Raum zuverlässig realisieren lässt.

Es wird auch eine Fügevorrichtung mit einem Magazin der voranstehend beschriebenen Art beansprucht. Durch eine solche Fügevorrichtung lassen sich die obigen Vorteile entsprechend erreichen.

Gemäß einer Ausführungsform ist das Magazin an einer Außenseite der Fügevorrichtung angebracht. Das Magazin lässt sich auf diese Weise leicht und insbesondere auch nachträglich an die Fügevorrichtung anbauen beziehungsweise zu Austausch- oder Wartungszwecken leicht von der Fügevorrichtung demontieren. Gemäß einer weiteren Ausführungsform ist ein aus dem Magazin entnommenes Fügeelement einem Werkzeug der Fügevorrichtung mittels Druckluft zuführbar. Durch die Zuführung des Fügeelements mittels Druckluft, braucht das Magazin nicht derart in die Fügevorrichtung integriert zu werden, dass ein aus dem Magazin ausgegebenes Fügeelement dem Werkzeug gravitationsbedingt zufällt. Vielmehr ist es möglich, das Magazin über eine Schlauchleitung mit einem das Werkzeug tragenden Werkzeugkopf der Fügevorrichtung zu verbinden. Dies trägt zur Vereinfachung einer, unter Umständen auch nachträglichen, Anbringung des Magazins außen an der Fügevorrichtung bei, was letztlich bedeutet, dass bei der Montage des Magazins an der Fügevorrichtung eine größere Freiheit besteht und das Magazin bei Bedarf leicht ausgetauscht werden kann.

Gegenstand des Unteranspruchs 15 ist ein System umfassend eine Fügevorrichtung der voranstehend beschriebenen Art, und eine Bereitstellungsvorrichtung zur Bereitstellung einer Mehrzahl von Fügeelementen, welche eine wenigstens zweispurige, an ein Magazin der Fügevorrichtung ankoppelbare Speicherstrecke zur Zwischenspeicherung der Mehrzahl von Fügeelementen und eine Transfereinrichtung aufweist, um die Mehrzahl von Fügeelementen aus der angekoppelten Speicherstrecke in das Magazin zu transferieren.

Nachfolgend wird die Erfindung rein beispielhaft anhand möglicher Ausführungsformen unter Bezugnahme auf die beigefügte Zeichnung beschrieben. Es zeigen:
- Fig. 1: ein erfindungsgemäßes Fügesystems mit zwei Reservoirs für zu verarbeitende Fügeelemente;
- Fig. 2: ein erfindungsgemäßes Fügesystems mit nur einem Reservoir für zu verarbeitende Fügeelemente;
- Fig. 3: eine Speicherstrecke des Fügesystems von Fig. 1 oder 2 in einer ersten Beladestellung;
- Fig. 4: die Speicherstrecke des Fügesystems von Fig. 1 oder 2 in einer zweiten Beladestellung;
- Fig. 5: die Speicherstrecke des Fügesystems von Fig. 1 oder 2 in einer Kopplungsstellung;
- Fig. 6: eine erste perspektivische Ansicht einer erfindungsgemäßen Fügevorrichtung mit einem daran angebrachten Magazin;
- Fig. 7: das Magazin von Fig. 6 ohne Tellerbürste und Abdeckung mit einer in einer ersten Stellung befindlichen Trennungseinheit;
- Fig. 8: das Magazin von Fig. 6 ohne Tellerbürste und Abdeckung mit einer in einer zweiten Stellung befindlichen Trennungseinheit;
- Fig. 9: das Magazin von Fig. 6 ohne Tellerbürste und Abdeckung mit einer in einer dritten Stellung befindlichen Trennungseinheit;
- Fig. 10: eine erste perspektivische Ansicht des Magazins von Fig. 6 mit Tellerbürste;
- Fig. 11: eine zweite perspektivische Ansicht des Magazins von Fig. 6;
- Fig. 12: zeigt eine Detailansicht eines Blockiermechanismus des Magazins von Fig. 6;
- Fig. 13: eine Detailansicht eines Kopplungsendes einer Speicherstrecke einer Bereitstellungsvorrichtung des Fügesystems von Fig. 1 oder 2 zur Bereitstellung von Fügeelementen.

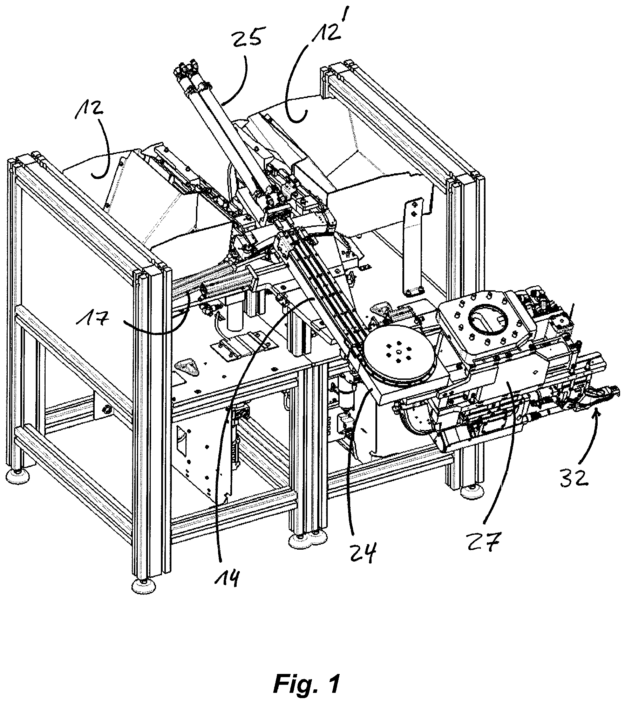

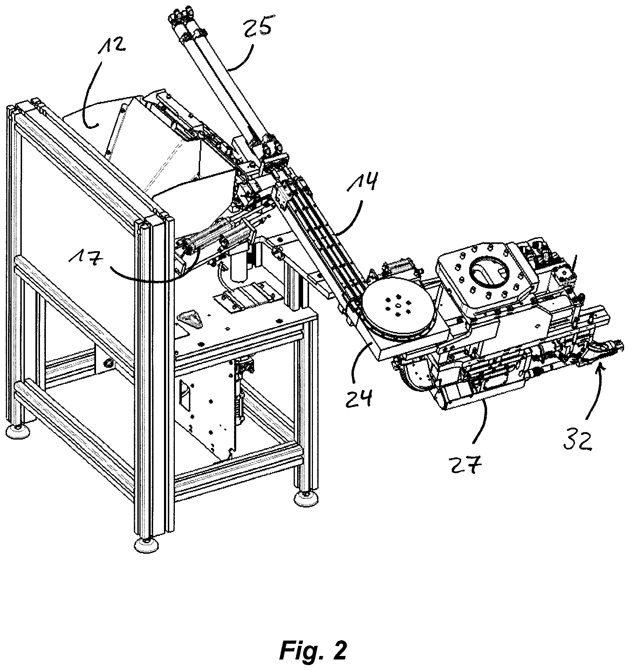

In Fig. 1 ist eine erste Ausführungsform eines Fügesystems dargestellt, welches für die Bereitstellung von zwei verschiedenen Sorten von Fügeelementen 10 über zwei trogförmige Reservoirs 12, 12' für die zu verarbeitenden Fügeelemente 10 verfügt. Fig. 2 zeigt eine zweite Ausführungsform von Fügesystem, welche lediglich ein trogförmiges Reservoir 12 aufweist und welche daher für die Verarbeitung einer einzigen Sorte von Fügeelementen 10 vorgesehen ist.

Im vorliegenden Ausführungsbeispiel handelt es sich bei den Fügeelementen 10 um Schrauben, insbesondere Metallschrauben, so dass das dargestellte Fügesystem als ein Schraubsystem bezeichnet werden kann. Insbesondere handelt es sich hierbei um ein automatisches Schraubsystem. Grundsätzlich kann es sich bei den Fügeelementen 10 aber auch um Elemente handeln, die in Fließbohrprozessen verarbeitet werden, oder um gewindefreie Setzelemente, die beispielsweise aus einem Metall- oder Kunststoffmaterial bestehen können und/oder in Reibschweißprozessen verarbeitet werden.

Das Fügesystem umfasst eine Speicherstrecke 14 zur Zwischenspeicherung von Fügeelementen 10, die mittels eines an sich bekannten mechanischen Fördermechanismus aus dem Reservoir 12 oder den Reservoirs 12, 12' bereitgestellt werden. Die Speicherstrecke 14 ist linear ausgebildet und weist zwei parallel zueinander verlaufende Aufnahmenuten 16, 16' zur Aufnahme der bereitgestellten Fügeelemente 10 auf. Die Länge der Speicherstrecke 14 ist so gewählt, dass eine gewünschte Anzahl von Fügeelementen 10 in der Speicherstrecke 14 zwischengespeichert werden kann, im vorliegenden Ausführungsbeispiel 25 Fügeelemente 10 in jeder Aufnahmenut 16.

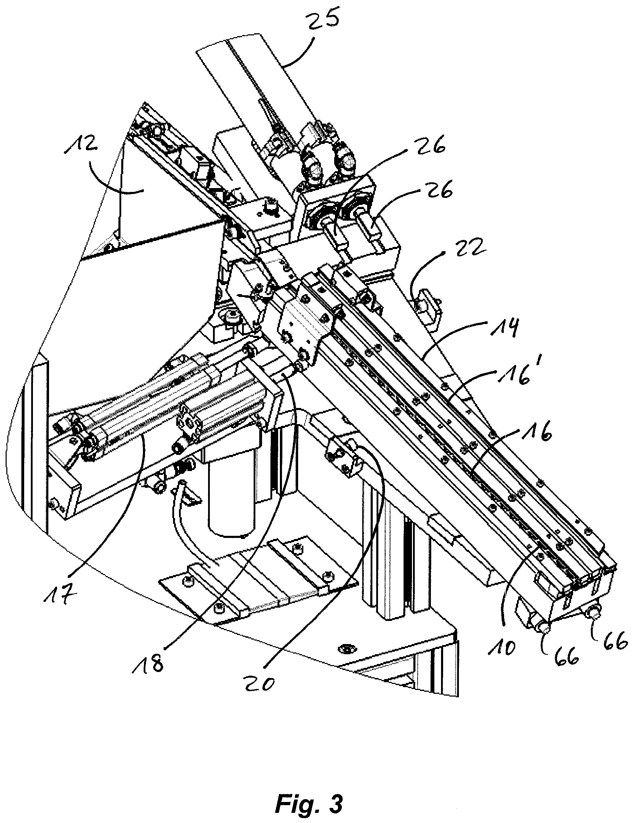

Zur Beladung der Speicherstrecke 14 mit Fügeelementen 10 ist die Speicherstrecke 14 mittels eines Pneumatikzylinders 17 aus einer hier auch als Kopplungsstellung bezeichneten Ausgangsstellung in eine durch einen ersten Anschlag 18 definierte erste Beladestellung verschwenkbar (Fig. 3), in welcher die eine Aufnahmenut 16 derart mit dem Fördermechanismus ausgerichtet ist, dass die durch den Fördermechanismus zuführten Fügeelemente 10 in diese Aufnahmenut 16 eingeführt werden können, beispielsweise Fügeelemente 10 der einen Sorte, welche dem einen Reservoir 12 entnommen werden.

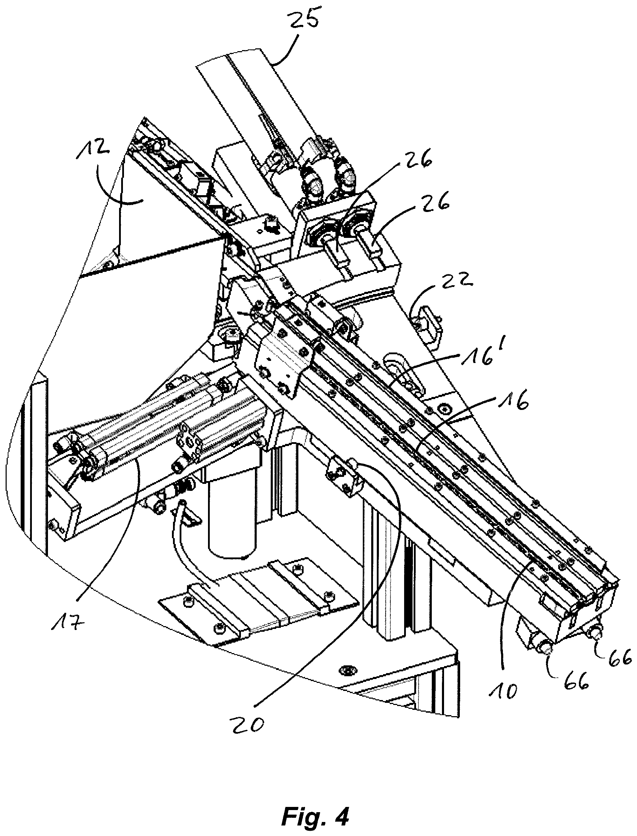

Nach Befüllung der einen Aufnahmenut 16 kann die Speicherstrecke 14 in eine durch einen zweiten Anschlag 20 definierte zweite Beladestellung weiter verschwenkt werden (Fig. 4), in welcher die andere Aufnahmenut 16' mit dem Fördermechanismus ausgerichtet ist, so dass nun die durch den Fördermechanismus zuführten Fügeelemente 10 in die andere Aufnahmenut 16' eingeführt werden können, beispielsweise Fügeelemente 10 der anderen Sorte, welche dem anderen Reservoir 12' entnommen werden.

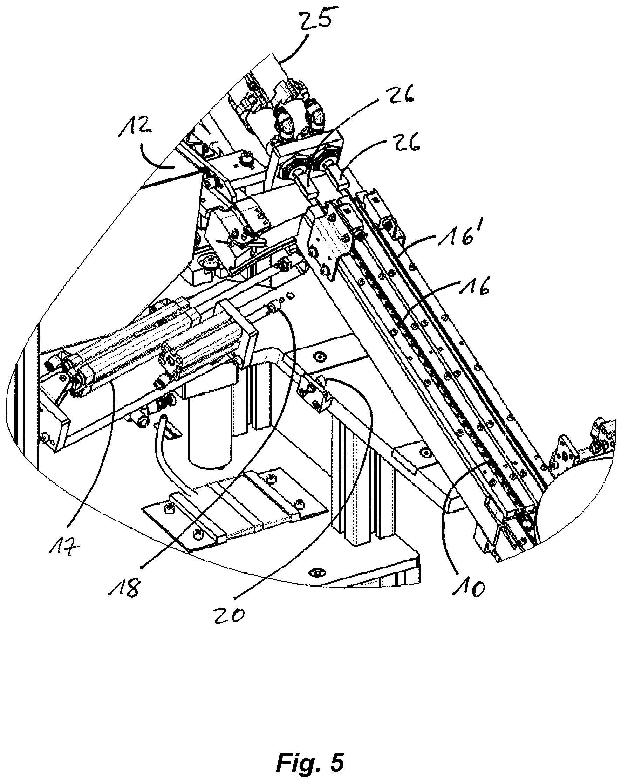

Ist die Speicherstrecke 14 voll beladen, kann sie wieder zurück in die Kopplungsstellung verschwenkt werden, welche durch einen dritten Anschlag 22 definiert ist (Fig. 5).

Wie in Fig. 1 bis 5 zu erkennen ist erfolgt die Verschwenkung der Speicherstrecke 14 in einer Ebene, in welcher die Aufnahmenuten 16 liegen und welche im vorliegenden Ausführungsbeispiel ausgehend von dem Fördermechanismus schräg nach unten geneigt ist.

In der in Fig. 1, 2 und 5 gezeigten Kopplungsstellung ist ein Magazin 24 an die Speicherstrecke 14 ankoppelbar, um die zwischengespeicherten Fügeelemente 10 aus der Speicherstrecke 14 in das Magazin 24 zu transferieren. Der Transfer der Fügeelemente 10 erfolgt mittels einer Transfereinrichtung 25, welche zwei pneumatisch betätigbare Kolben mit Schiebern 26 umfasst, die in die Aufnahmenuten 16 der Speicherstrecke 14 eintauchen können, um die in den Aufnahmenuten 16 befindlichen Fügeelemente 10 aus diesen herauszuschieben und in das Magazin 24 hineinzudrücken.

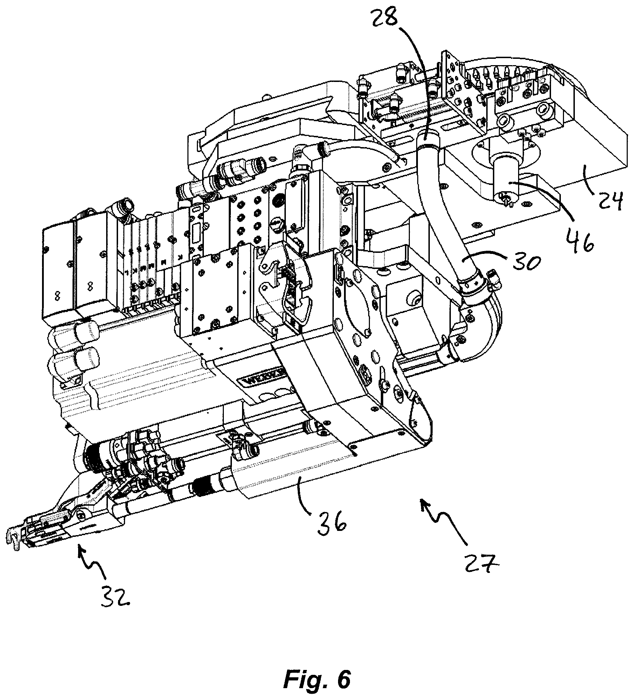

Das Magazin 24 ist an die Außenseite einer Fügevorrichtung 27 angebaut (Fig. 6), hier einer automatischen Schraubvorrichtung, welche ihrerseits beweglich im Raum gelagert ist und beispielsweise an einem Roboterarm montiert sein kann. Das Magazin 24 weist einen Magazinausgang 28 zur Abgabe von gespeicherten Fügeelementen 10 auf, an den eine Schlauchleitung 30 angeschlossen ist, über welche die abgegebenen Fügeelemente 10 mittels Druckluft einem Werkzeugkopf 32 der Fügevorrichtung 27 zugeführt werden kann. Der Werkzeugkopf 32 trägt ein Werkzeug, hier ein Schraubwerkzeug, welches durch eine Rotationsvorschubeinheit 36 der Fügevorrichtung 27 um seine Längsachse in Drehung versetzbar und entlang der Längsachse vorschiebbar ist, um das Werkzeug mit einem zugeführten Fügeelement 10 in Eingriff zu bringen und das Fügeelement 10 zu verarbeiten, in diesem Fall in ein zu fügendes Bauteil einzuschrauben.

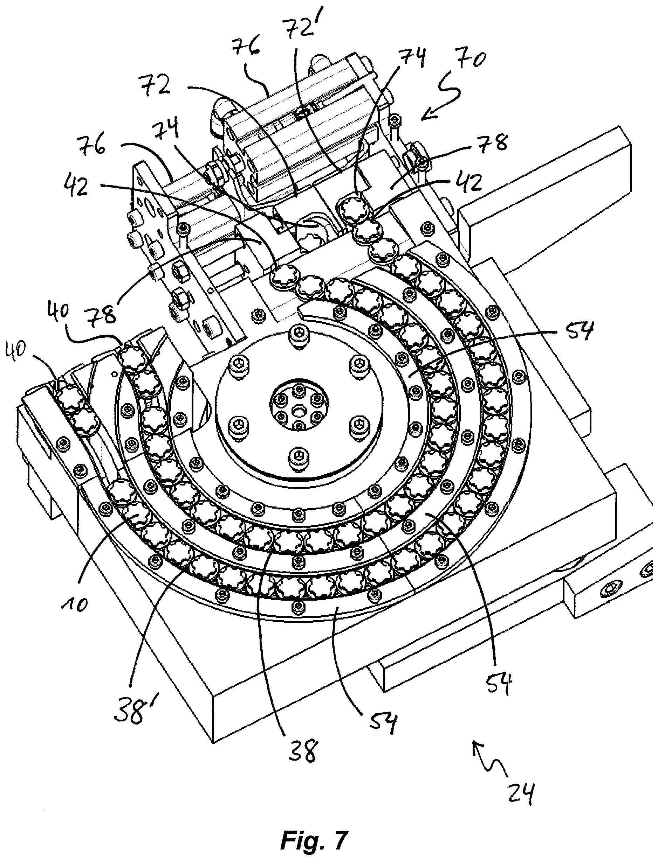

Wie Fig. 7 bis 9 zeigen, weist das Magazin 24 ferner zwei Speichernuten 38 zum Aufnehmen der Fügeelemente 10 auf, welche von der Speicherstrecke 14 transferiert wurden. Die Speichernuten 38 erstrecken sich zumindest abschnittsweise, genauer gesagt über etwas mehr als 180°, entlang zwei zueinander konzentrischen Kreisbahnen, d.h. die Speichernuten 38 verlaufen weitgehend parallel zueinander. Lediglich im Bereich ihrer Eingangsenden 40 und ihrer Ausgangsenden 42 weichen die Speichernuten 38 von ihrem parallelen Verlauf ab, indem sie divergieren.

Der Krümmungsradius der Speichernuten 38 ist so gewählt, dass sie zumindest den von der Speicherstrecke 14 transferierten Satz von Fügeelementen 10, hier von 2 x 25 Fügeelementen 10, vollständig aufnehmen können. Gleichzeitig soll das Magazin 24 vor einer neuen Befüllung mit Fügeelementen 10 idealerweise aber nicht leerlaufen, so dass die Länge der Speichernuten 38 des Magazins 24 letztlich etwas großzügiger bemessen ist als die Länge der Aufnahmenuten 16 der Speicherstrecke 14.

Sofern zwei verschiedene Sorten von Fügeelementen 10 verarbeitet werden, ist es vorteilhaft, wenn die Speichernuten 38 unterschiedlich ausgebildet und jeweils an die aufzunehmenden Fügeelemente 10 angepasst sind. Beispielsweise können sich die Speichernuten 38 in ihrer Tiefe und Weite unterscheiden. Gleiches gilt im Übrigen auch für die Aufnahmenuten 16 der Speicherstrecke 14. Sofern sich die zu verarbeitenden Fügeelemente 10 jedoch nur geringfügig unterscheiden oder nur eine Sorte von Fügeelementen 10 verarbeitet wird, können die Speichernuten 38 des Magazins 24 ebenso wie die Aufnahmenuten 16 der Speicherstrecke 14 aber auch einen identischen Querschnitt aufweisen.

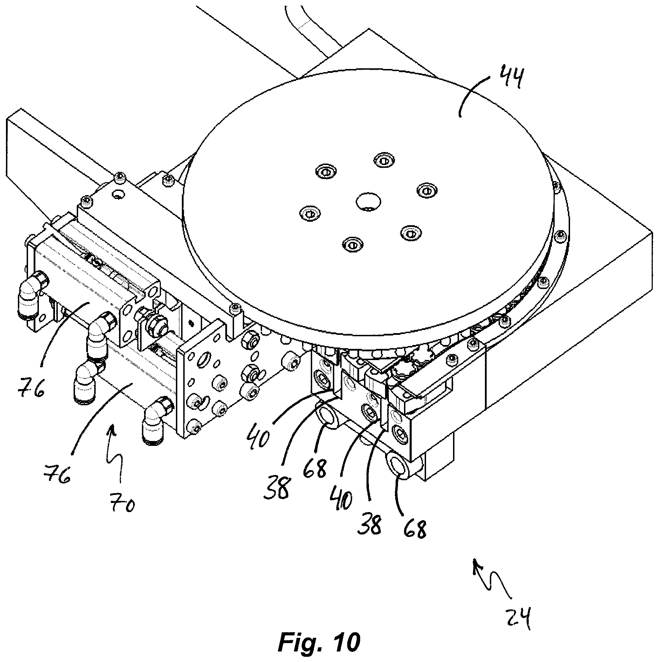

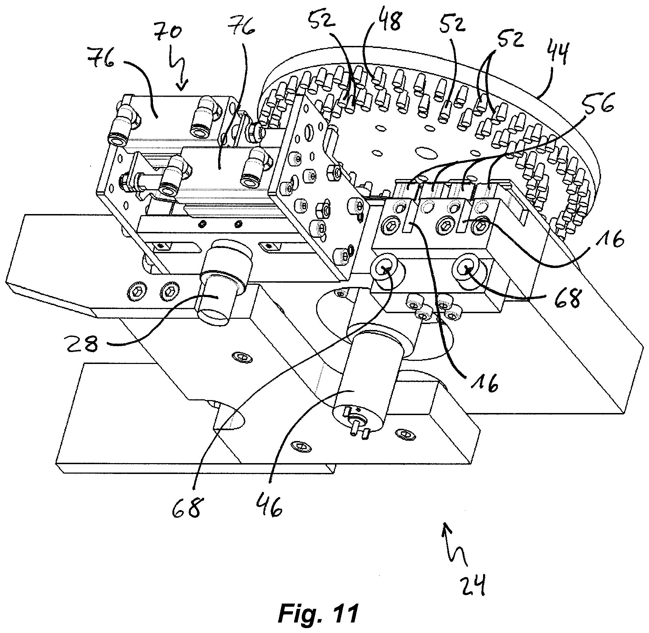

Der Vorschub der gespeicherten Fügeelemente 10 entlang den Speichernuten 38 erfolgt mittels einer über den Speichernuten 38 angeordneten Tellerbürste 44 (Fig. 10 und 11), welche um eine Drehachse drehbar ist, die senkrecht zu der Ebene, in der sich die Speichernuten 38 erstrecken, und durch den Krümmungsmittelpunkt der Speichernuten 38 verläuft. Für den Antrieb der Tellerbürste 44 ist ein Motor 46 vorgesehen. An einer zu den Speichernuten 38 weisenden Unterseite der Tellerbürste 44 sind Borsten 48 ausgebildet, welche mit den Köpfen 50 der in den Speichernuten 38 gespeicherten Fügeelemente 10 in Eingriff stehen. Dabei sind die Borsten 48 nicht ganzflächig angeordnet, sondern auf zwei konzentrische Borstenringe beschränkt, die mit den Speichernuten 38 ausgerichtet sind, d.h. also entsprechende Krümmungsradien aufweisen. Im dargestellten Ausführungsbeispiel ist jeder Borstenring aus zwei Reihen von Borstenbüscheln 52 gebildet, grundsätzlich wäre aber auch eine andere Anzahl von Reihen oder sogar ein homogener breiter Borstenring denkbar.

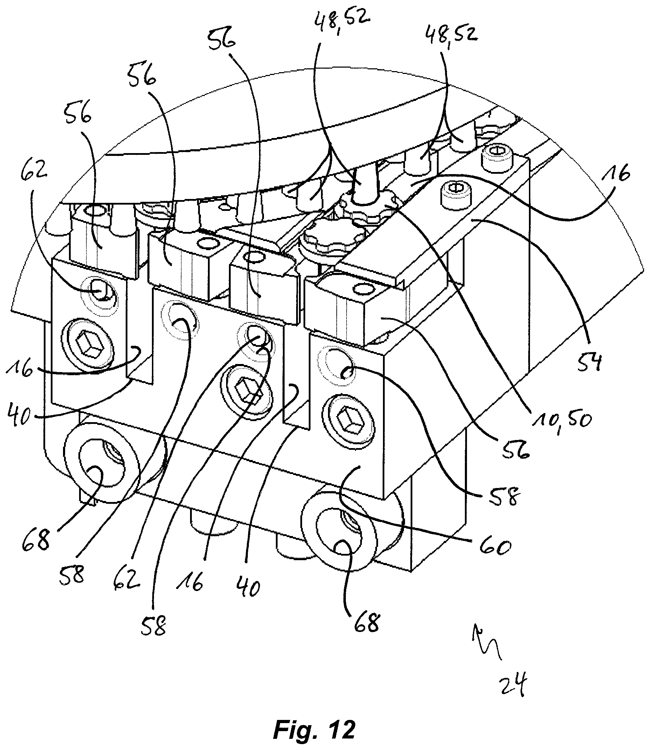

Wie in Fig. 12 genauer dargestellt ist, sind im Bereich der oben offenen Seiten der Speichernuten 38 sich entlang der Speichernuten 38 erstreckende Schienen 54 vorgesehen, welche zu den oben offenen Seiten der Speichernuten 38 beabstandet sind, um die Köpfe 50 der gespeicherten Fügeelemente 10 teilweise zu überragen. Die Schienen 54 verhindern ein Herausfallen der Fügeelemente 10 über die offenen Seiten der Speichernuten 38, für den Fall dass die Tellerbürste 44 in einer Überkopflage des Magazins 24 demontiert werden sollte, und bilden somit eine Führung für die Köpfe 50 der gespeicherten Fügeelemente 10.

Um ein Herausfallen der transferierten Fügeelemente 10 an den Eingangsenden 40 der Speichernuten 38 zu verhindern, ist im Bereich des Eingangsendes 40 jeder Speichernut 38, an welchem die Fügeelemente 10 in die Speichernut 38 einführbar sind, ein Blockiermechanismus vorgesehen. Jeder Blockiermechanismus umfasst zwei Klinken 56, die oberhalb der jeweiligen Speichernut 38 und auf gegenüberliegenden Seiten derselben beweglich gelagert und durch Federkraft aufeinander zu vorgespannt sind, um den Köpfen 50 der in die Speichernut 38 eingeführten Fügeelemente 10 den Rückweg zu versperren.

Unterhalb jeder Klinke 56 ist eine Bohrung 58 in einer das Eingangsende 40 der jeweiligen Speichernut 38 begrenzenden Stirnwand 60 des Magazins 24 vorgesehen, welche Zugang zu einem Betätigungsabschnitt 62 der Klinke 56 gewährt, mit dessen Hilfe sich die Klinke 56 aufdrücken lässt.

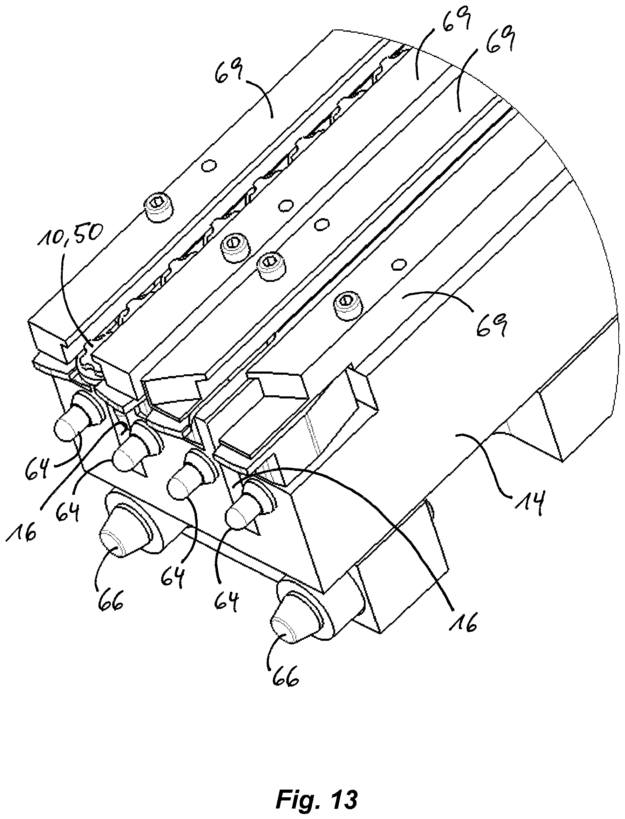

Wie Fig. 13 zeigt, sind am unteren Ende der Speicherstrecke 14 der Bereitstellungsvorrichtung Betätigungszapfen 64 auf gegenüberliegenden Seiten des Ausgangs jeder Aufnahmenut 16 vorgesehen. Diese Betätigungszapfen 64 sind derart ausgebildet und angeordnet, dass sie beim Ankoppeln des Magazins 24 an die Speicherstrecke 14 in die Bohrungen 58 in der Stirnwand 60 des Magazins 24 einfahren und mittels der Betätigungsabschnitte 62 die Klinken 56 aufdrücken, so dass sich die Fügeelemente 10 ungehindert von der Speicherstrecke 14 in das Magazin 24 transferieren lassen.

Um die Ankopplung des Magazins 24 an die Speicherstrecke 14 zu vereinfachen, ist die Speicherstrecke 14 an ihrem unteren Ende zusätzlich mit zwei Zentrierzapfen 66 versehen, welche mit zwei korrespondierenden Zentrieröffnungen 68 des Magazins 24 zusammenwirken, um eine korrekte Ausrichtung des Magazins 24 mit der Speicherstrecke 14 und insbesondere eine fluchtende Ausrichtung der Aufnahmenuten 16 der Speicherstrecke mit den Speichernuten 38 des Magazins 24 sicherzustellen.

Darüber hinaus weist auch die Speicherstrecke 14 zu den Aufnahmenuten 16 parallel verlaufenden Schienen 69 auf, welche ähnlich wie die Schienen 54 des Magazins 24 für eine zusätzliche Führung der in den Aufnahmenuten 16 zwischengespeicherten Fügeelemente 10 sorgen, insbesondere für eine Führung der Köpfe 50 der Fügeelemente 10, und ein Herausfallen der Fügeelemente 10 aus den Aufnahmenuten 16 verhindern.

Erneut auf Fig. 7 bis 9 Bezug nehmend ist im Bereich der Ausgangsenden 42 der Speichernuten 38 eine Trennungseinheit 70 angeordnet, welche dazu dient die gespeicherten Fügeelemente 10 wahlweise der einen oder der anderen Speichernut 38 zu entnehmen und an den Magazinausgang 28 zu übergeben. Die Trennungseinheit 70 umfasst zwei Trennungsschieber 72, die jeweils einer Speichernut 38 zugeordnet sind. Jeder Trennungsschieber 72 weist eine Kammer 74 zur Aufnahme eines Fügeelements 10 auf, welche seitlich zur Speichernut 38 hin offen ist, so dass ein durch die Tellerbürste 44 vorgeschobenes Fügeelement 10 in die Kammer 74 des Trennungsschiebers 72 vorrücken kann, wenn die Kammer 74 mit der zugeordneten Speichernut 38 ausgerichtet ist. Des Weiteren ist die Kammer 74 an ihrer Unterseite offen, damit sich ein in der Kammer 74 aufgenommenes Fügeelement 10 an den Magazinausgang 28 übergeben werden kann.

Die Trennungsschieber 72 sind mittels jeweiliger pneumatischer Zylinder 76 in einer Richtung quer zu den Speichernuten 38 im Bereich ihrer Ausgangsenden 42 in der durch die Erstreckung der Speichernuten 38 definierten Ebene verschiebbar, und zwar zwischen einer ersten Position, in welcher die Kammer 74 zur Aufnahme eines Fügeelements 10 mit ihrer zugeordneten Speichernut 38 ausgerichtet ist, und einer zweiten Position, in welcher die Kammer 74 mit dem Magazinausgang 28 ausgerichtet ist, um das aufgenommene Fügeelement 10 an den Magazinausgang 28 zu übergeben. Außerdem weist jeder Trennungsschieber 72 einen der Kammer 74 benachbarten Sperrabschnitt 78 auf, welcher das Ausgangsende 42 der zugeordneten Speichernut 38 versperrt, wenn sich der Trennungsschieber 72 in seiner zweiten Position befindet.

In Fig. 7 befindet sich der der inneren Speichernut 38 zugeordnete Trennungsschieber 72 in der zweiten Position, in welcher sich ein Fügeelement 10 gerade aus seiner Kammer 74 in den Magazinausgang 28 bewegt, während der der äußeren Speichernut 38' zugeordnete Trennungsschieber 72' in der ersten Position gerade ein Fügeelement 10 aufnimmt.

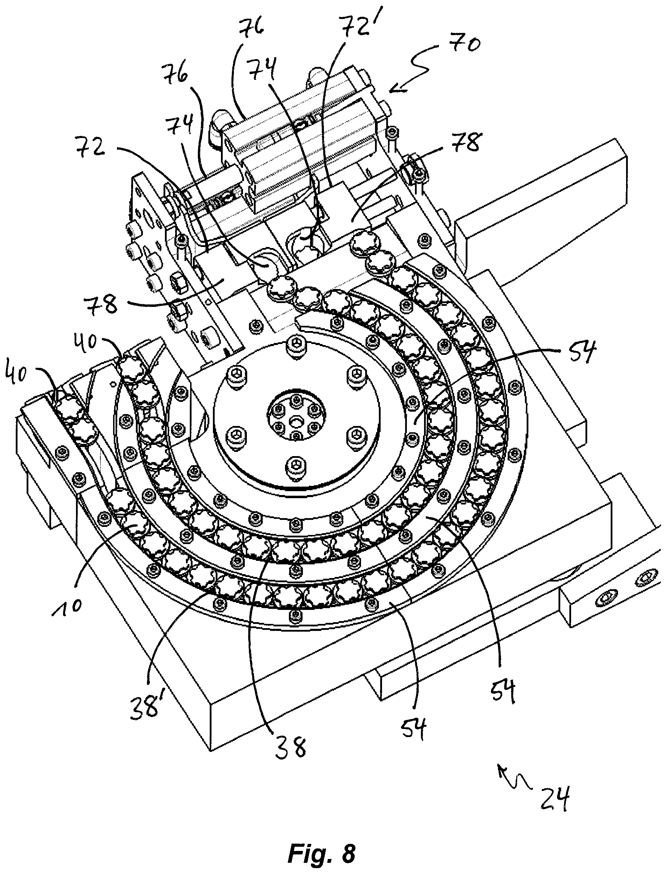

Fig. 8 zeigt eine umgekehrte Situation, in welcher sich der der äußeren Speichernut 38 zugeordnete Trennungsschieber 72 in der zweiten Position befindet, in welcher sich ein Fügeelement 10 gerade aus seiner Kammer 74 in den Magazinausgang 28 bewegt, während der der inneren Speichernut 38 zugeordnete Trennungsschieber 72 in der ersten Position kurz davor steht, ein Fügeelement 10 aufzunehmen.

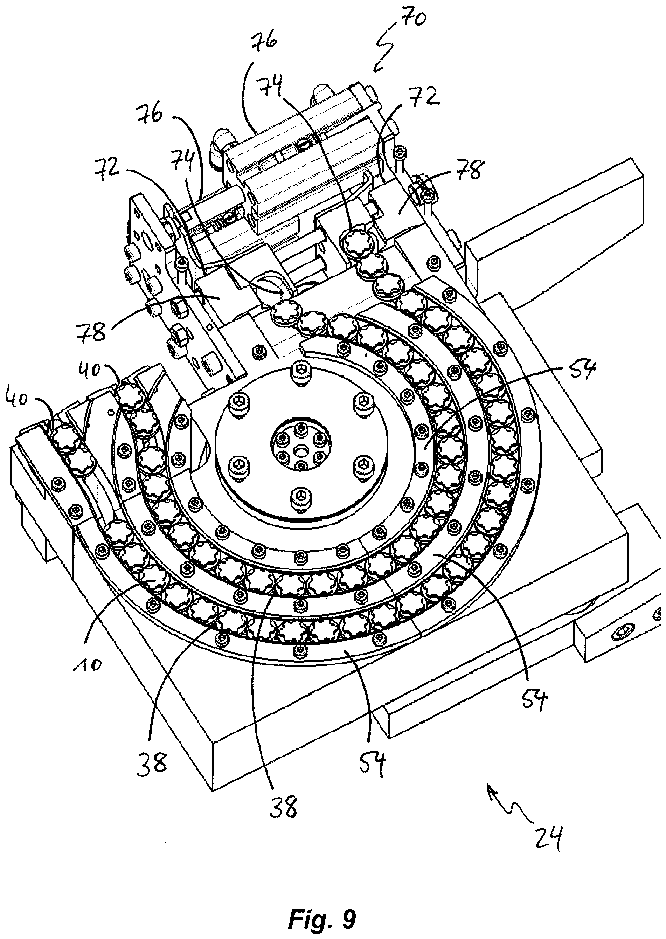

Fig. 9 zeigt eine Situation, in welcher beide Trennungsschieber 72 gleichzeitig ihre erste Position einnehmen, um jeweils ein Fügeelement 10 aufzunehmen.

Solange sich der Magazinausgang 28 unterhalb der Trennungseinheit 70 befindet, ist es grundsätzlich denkbar, ein Fügeelement 10 ausschließlich schwerkraftbedingt aus einem Trennungsschieber 72 in den Magazinausgang 28 fallen zu lassen. Eine solche Relativanordnung kann bei einer im Raum frei bewegbaren Fügevorrichtung 27 jedoch nicht immer sichergestellt werden. Daher weist das Magazin 24 eine in den Figuren nicht dargestellte Drucklufteinrichtung auf, welche mit dem Magazinausgang 28 ausgerichtet ist und mittels welcher ein Fügeelement 10 selbst dann aus einem in der zweiten Position befindlichen Trennungsschieber 72 in den Magazinausgang 28 und durch die Schlauchleitung 30 bis zu dem Werkzeugkopf 32 geblasen werden kann, wenn sich der Magazinausgang 28 bedingt durch die Arbeitsstellung der Fügevorrichtung 27 auf der Höhe der Trennungseinheit 70 oder sogar darüber befinden sollte.

### Bezugszeichenliste

- 10: Fügeelement
- 12: Reservoir
- 14: Speicherstrecke
- 16: Nut
- 17: Pneumatikzylinder
- 18: Anschlag
- 20: Anschlag
- 22: Anschlag
- 24: Magazin
- 25: Transfereinrichtung
- 26: Schieber
- 27: Fügevorrichtung
- 28: Magazinausgang
- 30: Schlauchleitung
- 32: Werkzeug kopf
- 36: Rotationsvorschubeinheit
- 38: Speichernut
- 40: Eingangsende
- 42: Ausgangsende
- 44: Tellerbürste
- 46: Motor
- 48: Borsten
- 50: Kopf des Fügeelements
- 52: Borstenbüschel
- 54: Schiene
- 56: Klinke
- 58: Bohrung
- 60: Stirnwand
- 62: Betätigungsabschnitt
- 64: Betätigungszapfen
- 66: Zentrierzapfen
- 68: Zentrieröffnung
- 69: Schiene
- 70: Trennungseinheit
- 72: Trennungsschieber
- 74: Kammer
- 76: Zylinder
- 78: Sperrabschnitt

## Patentansprüche

1. Magazin (24) zum Aufnehmen einer Mehrzahl von Fügeelementen (10) und Zuführen der Fügeelemente (10) zu einer Fügevorrichtung (27), mit zwei Speichernuten (38) zum Speichern und Führen der Fügeelemente (10), welche Speichernuten (38) sich zumindest abschnittsweise entlang zwei zueinander konzentrischen Kreisbahnen erstrecken,
**gekennzeichnet durch**
einen Vorschubmechanismus zur Bewegung der gespeicherten Fügeelemente (10) entlang den Speichernuten (38).

2. Magazin (24) nach Anspruch 1,
**dadurch gekennzeichnet, dass**
im Bereich einer offenen Seite der oder jeder Speichernut (38) eine Kopfführung zum Führen von Köpfen (50) der gespeicherten Fügeelemente (10) vorgesehen ist, insbesondere wobei die Kopfführung wenigstens eine Schiene (54) umfasst, welche zu der offenen Seite der Speichernut (38) beabstandet ist, um die Köpfe (50) der gespeicherten Fügeelemente (10) teilweise zu überragen.

3. Magazin (24) nach Anspruch 1 oder 2,
**dadurch gekennzeichnet, dass**
der Vorschubmechanismus eine Tellerbürste (44) umfasst, deren Borsten (48) mit den gespeicherten Fügeelementen (10) in Eingriff stehen, insbesondere wobei die Tellerbürste (44) um eine Drehachse drehbar ist, welche durch den Krümmungsmittelpunkt der Speichernuten (38) verläuft.

4. Magazin (24) nach Anspruch 3,
**dadurch gekennzeichnet, dass**
die Borsten (48) ausschließlich entlang zwei konzentrisch verlaufenden Kreisbahnen angeordnet sind, welche mit den Speichernuten (38) zusammenfallen.

5. Magazin (24) nach zumindest einem der vorstehenden Ansprüche,
**dadurch gekennzeichnet, dass**
im Bereich eines Eingangsendes (40) der oder jeder Speichernut (38), an welchem die Fügeelemente (10) in die Speichernut (38) einführbar sind, ein Blockiermechanismus vorgesehen ist, welcher ein Herausfallen der Fügeelemente (10) aus der Speichernut (38) verhindert.

6. Magazin (24) nach Anspruch 5,
**dadurch gekennzeichnet, dass**
der Blockiermechanismus zwei beweglich gelagerte Klinken (56) umfasst, die zur Versperrung der Speichernut (38) durch Federkraft aufeinander zu vorgespannt sind.

7. Magazin (24) nach Anspruch 5 oder 6,
**dadurch gekennzeichnet, dass**
der Blockiermechanismus so ausgebildet ist, dass er durch ein Mittel zur Bereitstellung von in die Speichernuten (38) einzuführenden Fügeelementen (10) zwangsgeöffnet werden kann.

8. Magazin (24) nach zumindest einem der vorstehenden Ansprüche,
**dadurch gekennzeichnet, dass**
eine Trennungseinheit (70) im Bereich von Ausgangsenden (42) der Speichernuten (38), an welchen die Fügeelemente (10) den Speichernuten (38) entnehmbar sind, angeordnet ist, um ein wahlweise der einen oder der anderen Speichernut (38) entnommenes Fügeelement (10) an einen Magazinausgang (28) zu übergeben.

9. Magazin (24) nach Anspruch 8,
**dadurch gekennzeichnet, dass**
die Trennungseinheit (70) wenigstens einen Trennungsschieber (72) umfasst.

10. Magazin (24) nach Anspruch 8 oder 9,
**dadurch gekennzeichnet, dass**
jeder Speichernut (38) ein Trennungsschieber (72) zugeordnet ist, wobei die Trennungsschieber (72) getrennt ansteuerbar und unabhängig voneinander betätigbar sind, insbesondere pneumatisch.

11. Magazin (24) nach zumindest einem der vorstehenden Ansprüche,
**dadurch gekennzeichnet, dass**
eine Drucklufteinrichtung, mittels welcher ein Fügeelement (10) aus der Trennungseinheit (70) in den Magazinausgang (28) bewegbar ist.

12. Magazin (24) nach zumindest einem der vorstehenden Ansprüche,
**dadurch gekennzeichnet, dass**
der Magazinausgang (28) einen Anschluss für eine Schlauchleitung (30) bildet.

13. Fügevorrichtung (27) mit einem daran angebrachten Magazin (24) nach einem der vorherigen Ansprüche.

14. Fügevorrichtung (27) nach Anspruch 13,
**dadurch gekennzeichnet, dass**
ein aus dem Magazin (24) entnommenes Fügeelement (10) mittels Druckluft einem Werkzeug der Fügevorrichtung (27) zuführbar ist und/oder ein Ausgang (28) des Magazins über eine Druckluftleitung, insbesondere eine Schlauchleitung (30), mit einem ein Werkzeug tragenden Werkzeugkopf (32) der Fügevorrichtung (27) verbunden ist.

15. System umfassend
eine Fügevorrichtung (27) nach Anspruch 13 oder 14 und
eine Bereitstellungsvorrichtung zur Bereitstellung einer Mehrzahl von Fügeelementen (10), welche eine wenigstens zweispurige, an ein Magazin (24) der Fügevorrichtung (27) ankoppelbare Speicherstrecke (14) zur Zwischenspeicherung der Mehrzahl von Fügeelementen (10) und eine Transfereinrichtung (25) aufweist, um die Mehrzahl von Fügeelementen (10) aus der angekoppelten Speicherstrecke (14) in das Magazin (24) zu transferieren.

## Claims

1. A magazine (24) for receiving a plurality of joining elements (10) and for supplying the joining elements (10) to a joining apparatus (27) comprising two storage grooves (38) for storing and guiding the joining elements (10), which storage grooves (38) extend at least sectionally along two mutually concentric circular paths,
**characterized by**
a feed mechanism for moving the stored joining elements (10) along the storage grooves (38).

2. A magazine (24) in accordance with claim 1,
**characterized in that**
a head guide for guiding heads (50) of the stored joining elements (10) is provided in the region of an open side of the or each storage groove (38), in particular with the head guide comprising at least one rail (54) which is spaced apart from the open side of the storage groove (38) to partly project over the heads (50) of the stored joining elements (10).

3. A magazine (24) in accordance with claim 1 or claim 2,
**characterized in that**
the feed mechanism comprises a plate brush (44) whose bristles (48) are in engagement with the stored joining elements (10), in particular with the plate brush (44) being rotatable about an axis of rotation which extends through the center of curvature of the storage grooves (38).

4. A magazine (24) in accordance with claim 3,
**characterized in that**
the bristles (48) are arranged only along two concentrically extending circular paths which coincide with the storage grooves (38).

5. A magazine (24) in accordance with at least one of the preceding claims,
**characterized in that**
a blocking mechanism which prevents the joining elements (10) from falling out of the storage groove (38) is provided in the region of an inlet end (40) of the or each storage groove (38) at which the joining elements (10) can be introduced into the storage groove (38).

6. A magazine (24) in accordance with claim 5,
**characterized in that**
the blocking mechanism comprises two movably supported catches (56) which are preloaded toward one another by spring force to block the storage groove (38).

7. A magazine (24) in accordance with claim 5 or claim 6,
**characterized in that**
the blocking mechanism is configured such that it can be forcibly opened by a means for providing joining elements (10) to be introduced into the storage grooves (38).

8. A magazine (24) in accordance with at least one of the preceding claims,
**characterized in that**
a separation unit (70) is arranged in the region of outlet ends (42) of the storage grooves (38) at which the joining elements (10) are removable from the storage grooves (38) to transfer a joining element (10) selectively removed from the one or the other storage groove (38) to a magazine outlet (28).

9. A magazine (24) in accordance with claim 8,
**characterized in that**
the separation unit (70) comprises at least one separation slider (72).

10. A magazine (24) in accordance with claim 8 or claim 9,
**characterized in that**
a separation slider (72) is associated with each storage groove (38), with the separation sliders (72) being separately controllable and being actuable independently of one another, in particular pneumatically.

11. A magazine (24) in accordance with at least one of the preceding claims,
**characterized in that**
a compressed air device by means of which a joining element (10) is movable out of the separation unit (70) into the magazine outlet (28).

12. A magazine (24) in accordance with at least one of the preceding claims,
**characterized in that**
the magazine outlet (28) forms a connector for a hose line (30).

13. A joining apparatus (27) having a magazine (24) in accordance with any one of the preceding claims attached thereto.

14. A joining apparatus (27) in accordance with claim 13,
**characterized in that**
a joining element (10) removed from the magazine (24) can be supplied to a tool of the joining apparatus (27) by means of compressed air; and/or **in that** an outlet (28) of the magazine is connected via a compressed air line, in particular a hose line (30), to a tool head (32) of the joining apparatus (27) supporting a tool.

15. A system comprising
a joining apparatus (27) in accordance with claim 13 or claim 14; and
an allocation apparatus for providing a plurality of joining elements (10) which has a storage line (14) for buffering the plurality of joining elements (10), said storage line (14) having at least two tracks and being couplable to a magazine (24) of the joining apparatus (27), and which has a transfer device (25) to transfer the plurality of joining elements (10) from the coupled storage line (14) into the magazine (24).

## Revendications

1. Magasin (24) pour recevoir une pluralité d'éléments d'assemblage (10) et pour amener les éléments d'assemblage (10) à un dispositif d'assemblage (27), présentant deux rainures de stockage (38) pour stocker et guider les éléments d'assemblage (10), lesdites rainures de stockage (38) s'étendant au moins localement le long de deux trajectoires circulaires concentriques l'une à l'autre,
**caractérisé par**
un mécanisme d'avance pour déplacer les éléments d'assemblage stockés (10) le long des rainures de stockage (38).

2. Magasin (24) selon la revendication 1,
**caractérisé en ce que**
au niveau d'un côté ouvert de la ou de chaque rainure de stockage (38), il est prévu un guidage de tête pour guider les têtes (50) des éléments d'assemblage stockés (10), en particulier le guidage de tête comprenant au moins un rail (54) qui est espacé dudit côté ouvert de la rainure de stockage (38) pour surmonter partiellement les têtes (50) des éléments d'assemblage stockés (10).

3. Magasin (24) selon la revendication 1 ou 2,
**caractérisé en ce que**
le mécanisme d'avance comprend une brosse-disque (44) dont les poils (48) sont en engagement avec les éléments d'assemblage stockés (10), en particulier la brosse-disque (44) étant mobile en rotation autour d'un axe de rotation qui passe par le centre de courbure des rainures de stockage (38).

4. Magasin (24) selon la revendication 3,
**caractérisé en ce que**
les poils (48) sont disposés exclusivement le long de deux trajectoires circulaires concentriques qui coïncident avec les rainures de stockage (38).

5. Magasin (24) selon l'une au moins des revendications précédentes,
**caractérisé en ce que**
au niveau d'une extrémité d'entrée (40) de la ou de chaque rainure de stockage (38), extrémité à laquelle les éléments d'assemblage (10) peuvent être introduits dans la rainure de stockage (38), il est prévu un mécanisme de blocage qui empêche les éléments d'assemblage (10) de tomber hors de la rainure de stockage (38).

6. Magasin (24) selon la revendication 5,
**caractérisé en ce que**
le mécanisme de blocage comprend deux cliquets (56) montés mobiles qui sont précontraints l'un vers l'autre par une force élastique pour obturer la rainure de stockage (38).

7. Magasin (24) selon la revendication 5 ou 6,
**caractérisé en ce que**
le mécanisme de blocage est réalisé de manière à pouvoir être ouvert à force par un moyen d'alimentation des éléments d'assemblage (10) à introduire dans les rainures de stockage (38).

8. Magasin (24) selon l'une au moins des revendications précédentes,
**caractérisé en ce que**
une unité de séparation (70) est agencée au niveau des extrémités de sortie (42) des rainures de stockage (38), auxquelles les éléments d'assemblage (10) peuvent être prélevés hors des rainures de stockage (38), afin de remettre à une sortie de magasin (28) un élément d'assemblage (10) prélevé au choix hors de l'une ou de l'autre des rainures de stockage (38).

9. Magasin (24) selon la revendication 8,
**caractérisé en ce que**
l'unité de séparation (70) comprend au moins un coulisseau de séparation (72).

10. Magasin (24) selon la revendication 8 ou 9,
**caractérisé en ce que**
un coulisseau de séparation (72) est associé à chaque rainure de stockage (38), les coulisseaux de séparation (72) étant pilotables séparément et étant actionnables indépendamment les uns des autres, en particulier par voie pneumatique.

11. Magasin (24) selon l'une au moins des revendications précédentes,
**caractérisé en ce que**
il est prévu un dispositif pneumatique permettant de déplacer un élément d'assemblage (10) hors de l'unité de séparation (70) jusque dans la sortie de magasin (28).

12. Magasin (24) selon l'une au moins des revendications précédentes,
**caractérisé en ce que**
la sortie de magasin (28) constitue un raccord pour une conduite de tuyau (30).

13. Dispositif d'assemblage (27) comportant un magasin (24) selon l'une des revendications précédentes, monté sur ledit dispositif.

14. Dispositif d'assemblage (27) selon la revendication 13,
**caractérisé en ce que**
un élément d'assemblage (10) prélevé hors du magasin (24) peut être amené par air comprimé à un outil du dispositif d'assemblage (27), et/ou une sortie (28) du magasin est reliée à une tête d'outil (32) du dispositif d'assemblage (27) portant un outil, par l'intermédiaire d'une conduite pneumatique, en particulier d'une conduite de tuyau (30).

15. Système comprenant
un dispositif d'assemblage (27) selon la revendication 13 ou 14, et un dispositif d'alimentation pour alimenter une pluralité d'éléments d'assemblage (10), qui comprend un trajet de stockage (14) à au moins deux voies susceptible d'être couplé à un magasin (24) du dispositif d'assemblage (27) et destiné au stockage intermédiaire de la pluralité d'éléments d'assemblage (10), et un moyen de transfert (25) pour transférer la pluralité d'éléments d'assemblage (10) hors du trajet de stockage couplé (14) jusque dans le magasin (24).
